# FASCICULE DE BREVET EUROPEEN

(11) **EP 0 923 165 B1**
(45) Date de publication et mention de la délivrance du brevet: **19.09.2001**
(21) Numéro de dépôt: 98403069.2
(22) Date de dépôt: 07.12.1998
(51) Int. Cl.: H01R 13/59, H02G 3/06

(54) **Dispositif imperdable pour douille d'ancrage de conduit**
Unverlierbare Vorrichtung für Verankerungshülse einer Leitung
Device for preventing loss of anchoring sleeve of a conduit

(30) Priorité: 10.12.1997 FR 9715631
(43) Date de publication de la demande: 16.06.1999
(73) Titulaire: LEGRAND, F-87000 Limoges (FR); LEGRAND SNC, F-87000 Limoges (FR)
(72) Inventeur: Kevassay, Guy, 93310 Le Pre Saint Gervais (FR)
(74) Mandataire: CABINET BONNET-THIRION

(56) Documents cités:
- DE-A- 3 240 701
- FR-A- 2 480 026
- FR-A- 2 501 928
- FR-A- 2 526 597

## Description

La présente invention concerne un dispositif destiné à réaliser l'ancrage d'un conduit tel que câble ou tuyau dans un corps. Il s'agit plus précisément d'un tel dispositif comportant un bouchon qui se visse sur ledit corps une douille d'ancrage maintenue dans le bouchon après vissages et dévissages multiples du corps et du bouchon.

On connaît déjà un dispositif destiné à réaliser l'ancrage d'un câble ou d'un tuyau traversant une paroi. Le brevet français n° 2 480 026 et le certificat d'addition correspondant n° 2 526 597 décrivent un tel dispositif. Dans un tel dispositif la douille d'ancrage n'est pas maintenue dans le bouchon lorsque le corps et le bouchon ne sont pas vissés l'un à l'autre. Ceci pose des difficultés notamment lors du montage du conduit dans le dispositif : le positionnement et le passage du conduit avant vissage n'est pas aisé. En outre, la personne chargée du montage risque d'oublier de monter la douille d'ancrage, puisque cette dernière est perdable : ceci entraîne la perte des fonctions liées à cette douille d'ancrage.

L'invention a pour but de remédier à ces difficultés :
- en assurant le maintien de la douille d'ancrage dans le bouchon avant et après montages et démontages multiples du corps et du bouchon ;
- en facilitant le positionnement et le passage du conduit avant montage ;
- en facilitant la manoeuvre de montage et de démontage du corps et de l'ensemble constitué par le bouchon et la douille d'ancrage; le conduit n'étant pas entraîné en rotation pendant cette manoeuvre, il ne subit pas de torsion.

L'invention propose à ces effets un dispositif destiné à réaliser l'ancrage d'un conduit, notamment câble électrique, dans un corps, notamment corps de connecteur, comportant un bouchon se montant sur ledit corps et une douille d'ancrage qui est disposée dans ce bouchon et qui peut prendre, en fonction de la position du bouchon dans le corps, une configuration non serrée ou une configuration serrée, caractérisé par la disposition sur la douille d'ancrage et sur le bouchon de moyens complémentaires adaptés à maintenir la douille d'ancrage dans le bouchon.

Ainsi le dispositif de l'invention permet le maintien de la douille d'ancrage dans le bouchon avant et après montages et démontages multiples du corps et du bouchon.

Le dispositif présente en outre les avantages d'un dispositif selon l'art antérieur, il permet notamment l'amarrage d'un conduit de plusieurs diamètres avec la même douille d'ancrage et garantit l'étanchéité lorsqu'il comporte une garniture d'étanchéité.

Dans un mode préféré de réalisation du dispositif, la douille d'ancrage est non seulement maintenue dans le bouchon, mais elle y est également immobilisée par complémentarité de forme avant montages et après démontages du corps et du bouchon.

Le dispositif est réalisé de préférence de telle sorte que la douille d'ancrage est dans sa configuration non serrée, avant vissages et après dévissages du bouchon et du corps.

Ces modes de réalisation sont préférés car ils permettent notamment de faciliter le positionnement et le passage du conduit.

Un exemple de réalisation très simple des moyens complémentaires adaptés à maintenir la douille d'ancrage dans le bouchon consiste à munir, d'une part, la douille d'ancrage d'au moins un ergot saillant radialement et, d'autre part, le bouchon d'au moins une empreinte en creux radialement apte à recevoir ledit au moins un ergot.

Le dispositif peut comporter une douille d'ancrage comportant au moins un ergot saillant radialement et un bouchon comportant plusieurs empreintes en creux radialement aptes à recevoir ledit au moins un ergot.

Selon un mode de réalisation du dispositif, la douille d'ancrage comporte plusieurs ergots saillant radialement et le bouchon comporte plusieurs empreintes, en nombre égal au nombre d'ergots, en creux radialement, chacune des empreintes étant apte à recevoir un desdits ergots.

La présence de plusieurs empreintes sur le bouchon permet de faciliter le montage de la douille d'ancrage dans le bouchon : en effet il est alors plus aisé de trouver une empreinte sans trop tourner la douille d'ancrage.

Chaque ergot est avantageusement réalisé sous forme d'une calotte sphérique : ceci permet notamment de monter ou de démonter de façon progressive la douille d'ancrage dans le bouchon.

Au moins une empreinte est avantageusement réalisée avec la forme d'une rainure qui présente deux flancs longitudinaux et qui est limitée axialement par un rebord.

Le dispositif est réalisé de préférence de telle sorte qu'à partir d'une situation où chaque ergot est logé dans une empreinte, le montage du bouchon sur le corps resserre la douille d'ancrage ce qui entraîne l'échappement de chaque ergot de l'empreinte dans laquelle il était logé. Ceci facilite le montage en permettant notamment la libre rotation du bouchon vis-à-vis de la douille d'ancrage lorsque cette dernière agrippe le conduit. Les contraintes de torsion indésirables au niveau du conduit sont évitées.

Dans un mode de réalisation préféré du dispositif, la douille d'ancrage est munie d'un ensemble de doigts cunéiformes alternant avec un ensemble de lamelles d'entraînement de ces doigts, l'un au moins des doigts portant un ergot ; chaque doigt pouvant porter un ergot.

Le corps et le bouchon formant un passage tubulaire lorsque le corps et le bouchon sont montés l'un sur l'autre, un mode de réalisation avantageux du dispositif permet qu'à partir d'une situation où chaque ergot est logé dans une empreinte, le serrage du bouchon sur le corps incurve vers l'intérieur du passage tubulaire sous l'action des lamelles d'entraînement au moins chaque doigt qui présente un ergot : ceci peut être réalisé en particulier sous l'action des lamelles d'entraînement.

Dans un mode plus particulier et préféré de réalisation, la douille d'ancrage comporte cinq ergots saillant radialement et le bouchon comporte cinq empreintes aptes chacune à recevoir un ergot.

Les caractéristiques et avantages de l'invention ressortiront d'ailleurs de la description qui va suivre, à titre d'exemple, en référence aux dessins schématiques annexés sur lesquels :

La figure 1 représente une prise utilisant le dispositif de l'invention.

La figure 2 est une représentation éclatée, partie en coupe, partie en vue extérieure , partie en vue extérieure arrachée du dispositif selon l'invention.

La figure 3 est une vue extérieure d'une partie du dispositif suivant l'invention.

La figure 4 est une représentation, partie en coupe, partie en vue extérieure, partie en vue extérieure arrachée du dispositif selon l'invention avant serrage ou après desserrage du corps et du bouchon.

La figure 5 est une représentation semblable à la précédente montrant le dispositif après serrage ou avant desserrage du corps et du bouchon.

La figure 6 est une représentation agrandie, en coupe, de la zone entourant l'ergot avant serrage ou après desserrage du corps et du bouchon.

La figure 7 est une représentation semblable à la précédente, après serrage ou avant desserrage du corps et du bouchon.

Les figures 8, 9, 10 et 11 représentent une douille d'ancrage.

La figure 12 représente une variante du dispositif de l'invention.

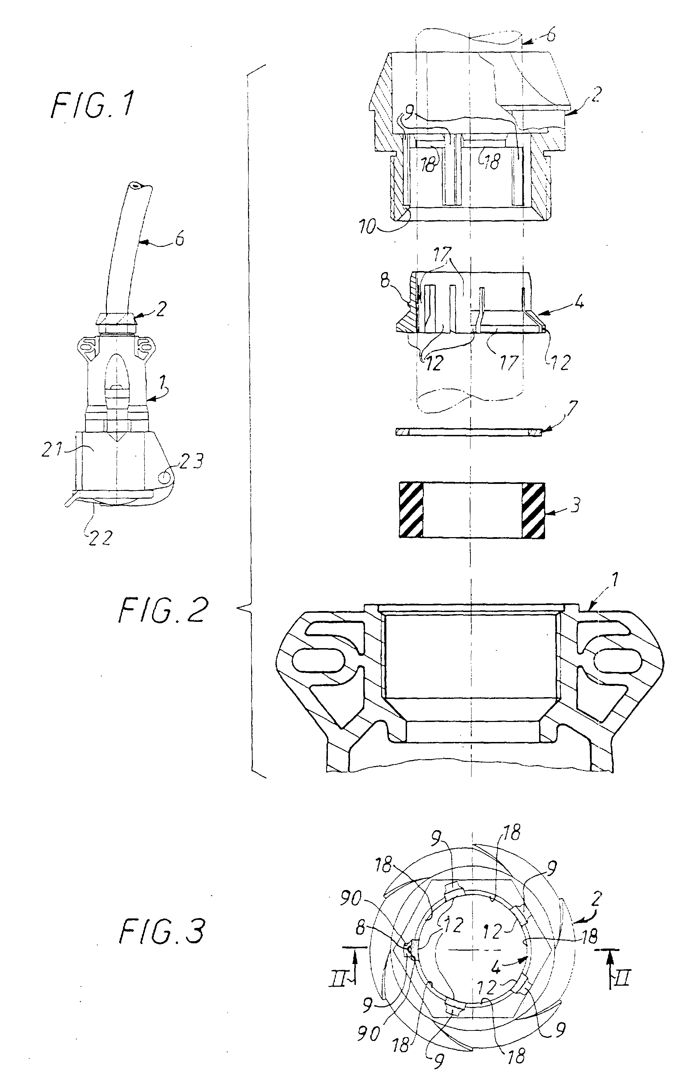

Suivant la forme de réalisation choisie et représentée, l'invention est appliquée à un connecteur tel qu'illustré à la figure 1 pour prise ou fiche de courant étanche. Un tel connecteur comporte un corps 1 et un bouchon 2 qui forment passage pour un câble 6 vers une extrémité 21 du connecteur. Le connecteur présente un couvercle 22 articulé sur une charnière d'axe 23.

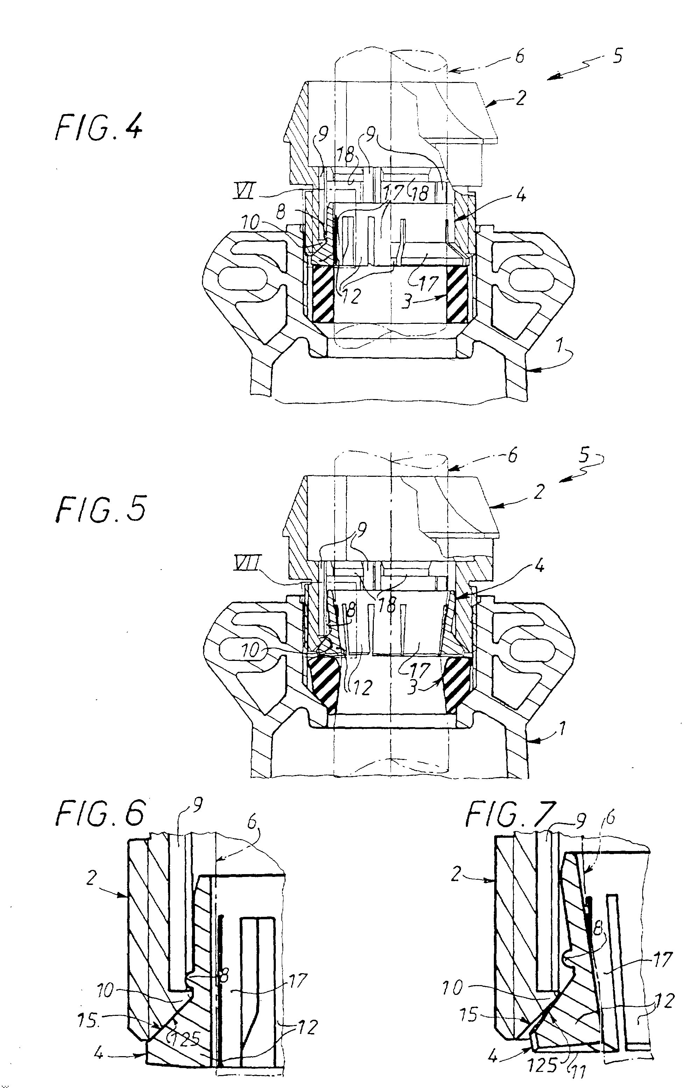

La figure 2 représente les différents éléments du dispositif : le corps 1, le bouchon 2, une garniture d'étanchéité 3 de forme annulaire, une douille d'ancrage 4 et une rondelle 7. Le corps et le bouchon se vissent l'un sur l'autre : ils forment alors un corps tubulaire 5 (figures 4 et 5). Le câble 6 traverse ledit corps tubulaire. Des empreintes 9 forment entre deux flancs 90 des rainures limitées axialement d'un côté par un rebord 10 (figures 3 et 6). Le bouchon 2, présente des parties en saillie 18, décalées par rapport aux empreintes 9 (figures 2, 3 et 5).

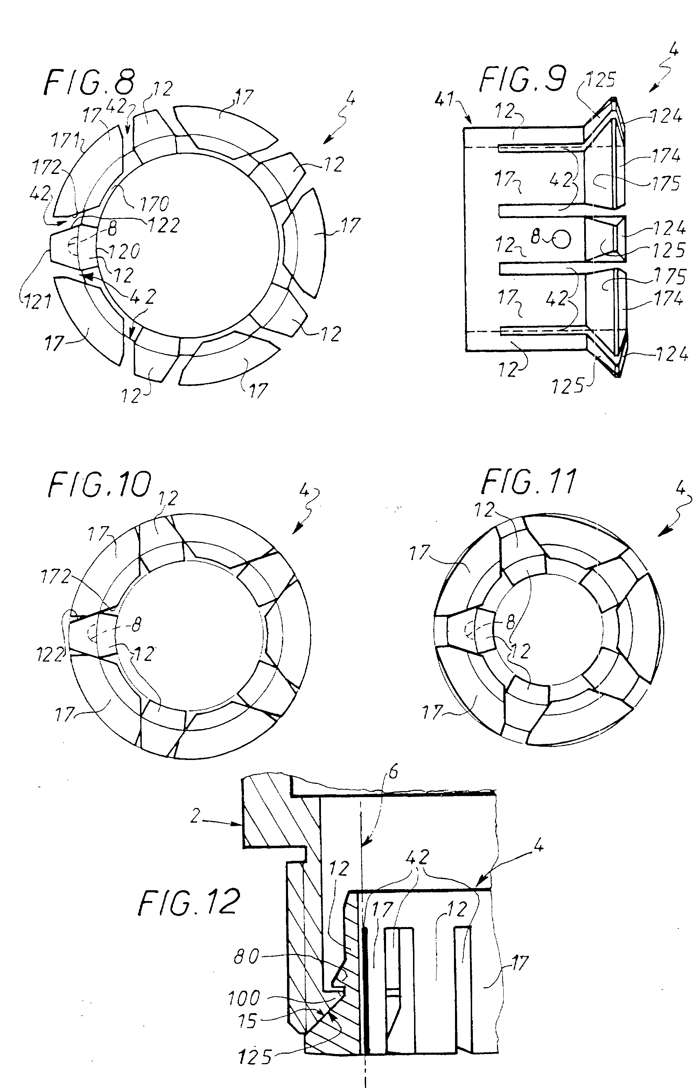

Les figures 8 et 9 représentent la douille d'ancrage : elle comporte une base 41 et elle est fractionnée au moyen de fentes 42 dirigées axialement en une alternance de lamelles 17 et de doigts 12 s'étendant sur une majeure partie de la longueur axiale de la douille d'ancrage à partir de la base 41. Les lamelles 17 (respectivement les doigts 12) présentent une partie interne arrondie 170 (respectivement 120) et une partie externe arrondie 171 (respectivement 121). Des rampes 172 (respectivement 122) apparaissent sur les lamelles 17 (respectivement sur les doigts 12). Les doigts sont cunéiformes : comme le montre la figure 10, les rampes adjacentes précitées sont complémentaires. L'un des doigts est muni d'un ergot 8 en forme de calotte sphérique. La figure 9 montre les lamelles (respectivement les doigts) s'enracinant à une de leurs extrémités dans la base de la douille d'ancrage et présentant à l'autre de leurs extrémités une partie élargie 174 (respectivement 124). Les lamelles (respectivement les doigts) présentent une rampe 175 (respectivement 125) qui est complémentaire d'une rampe 15 sur le bouchon (figures 6 et 9).

Pour monter la douille d'ancrage dans le bouchon, on la fait coulisser dans le bouchon jusqu'à encliquetage de l'ergot dans une des empreintes ; pour faciliter ce montage on peut éventuellement faire fléchir vers l'intérieur du bouchon le doigt portant l'ergot. Ceci facilite le passage de l'ergot au niveau du rebord lors du montage. L'ergot 8, logé dans l'empreinte 9 assure le maintien de la douille d'ancrage dans le bouchon avant et après vissages et dévissages multiples du corps et du bouchon.

La figure 6 montre, dans l'exemple de réalisation décrit, comment la douille d'ancrage est immobilisée dans le bouchon par complémentarité de forme avant vissages et après dévissages multiples du bouchon et du corps. En effet le mouvement en translation axiale de la douille d'ancrage vis-à-vis du bouchon est empêché par la présence du rebord 10, de l'ergot 8, de la partie élargie 125 et de la rampe 15. Le mouvement en rotation axiale de la douille d'ancrage vis-à-vis du bouchon est également empêché par la présence de l'ergot et des flancs 90 de l'empreinte.

Avant serrage (figure 4) la douille d'ancrage est disposée dans le bouchon et la garniture d'étanchéité est placée dans le corps. Le corps et le bouchon sont mis au bout l'un de l'autre prêts à être vissés. La douille d'ancrage est dans la conformation non serrée et la garniture d'étanchéité est non comprimée : la figure 8 représente la disposition relative des dents et des lamelles dans cette situation.

Le corps et le bouchon sont ensuite (figure 5) vissés l'un sur l'autre. La rampe 15 du bouchon est destinée à coopérer avec les rampes 125 et 175 de la douille d'ancrage lors du vissage du corps sur le bouchon : par action réciproque de pression de la douille d'ancrage et de la garniture d'étanchéité, d'une part, la douille d'ancrage se resserre dans sa partie fendue et, d'autre part, la garniture d'étanchéité subissant une compression en sens axial s'épanouit en sens radial et assure ainsi l'étanchéité. L'effet du resserrement de la douille d'ancrage dans sa partie fendue est représenté sur la figure 10 dans un premier stade de serrage, où les lamelles et les doigts viennent juste en contact les uns avec les autres, et sur la figure 11 dans un stade ultérieur de serrage : par action réciproque des rampes 172 et des rampes 122 adjacentes, les doigts sont contraints à se resserrer davantage ; les doigts fonctionnent comme des griffes qui agrippent le câble (figures 8, 10 et 11). La douille d'ancrage est en conformation serrée sur la figure 5 : elle est d'autant plus refermée que le corps est fortement vissé sur le bouchon. Ceci est utile pour agripper des câbles de faible diamètre.

Pendant une première phase de desserrage le bouchon va effectuer un mouvement de rotation par rapport à la douille d'ancrage, car elle agrippe le câble. Progressivement la douille d'ancrage se desserre et les doigts de la douille d'ancrage vont libérer le câble : le bouchon continue de tourner autour de la douille jusqu'à ce qu'elle soit suffisamment desserrée pour permettre à un ergot d'être capté dans une rainure. La douille d'ancrage se solidarise alors au bouchon : elle est entraînée et maintenue par le bouchon.

La figure 6 montre également que la douille d'ancrage, disposée dans le bouchon, se présente en conformation non serrée, avant vissages et après dévissages multiples du bouchon et du corps. Cette disposition des éléments permet le passage aisé du câble.

La figure 7 montre comment la douille d'ancrage présente ses doigts en conformation resserrée après vissages ou avant dévissages multiples du bouchon et du corps. Cette figure montre également que l'ergot sort de la rainure dans une telle conformation resserrée de la douille d'ancrage : ceci est conçu pour permettre la libre rotation du bouchon lorsque la douille d'ancrage est agrippée au câble. On évite ainsi, les contraintes de torsion indésirables au niveau du câble. Les parties en saillie 18 servent à empêcher que la douille 4 ne s'échappe du bouchon 2. Ces parties en saillie 18 sont décalées par rapport aux rainures pour permettre le moulage du bouchon 2.

La garniture d'étanchéité assure l'étanchéité du câble au niveau de la traversée du bouchon.

Le bouchon, le corps et la douille d'ancrage sont réalisés, par exemple, en plastique moulé. La garniture d'étanchéité doit garantir l'étanchéité du dispositif, c'est pourquoi elle peut avantageusement être réalisée dans un matériau élastique tel que caoutchouc.

La rondelle 7, interposée en variante entre la douille d'ancrage et la garniture d'étanchéité, diminue le cisaillement de la garniture d'étanchéité avec la douille d'ancrage : ceci facilite le resserrement de la douille d'ancrage. Le matériau pour réaliser un tel moyen est choisi pour permettre le meilleur glissement d'un élément par rapport à l'autre. Pour faciliter le glissement on choisit de préférence de rendre ces éléments lisses.

Sur la figure 12, on a représenté le dispositif de l'invention, pour lequel on a réalisé, d'une part, un rebord d'accrochage 100 sur tout le tour du bouchon et, d'autre part, un cran d'encliquetage 80 qui est disposé sur un doigt et qui a, en vue de coupe, la forme d'une demie pointe de flèche. Un tel cran d'encliquetage peut également être disposé sur une lamelle. Il peut y avoir plusieurs tels crans d'encliquetage disposés sur la périphérie de la douille d'ancrage, par exemple uniquement sur les doigts ou uniquement sur les lamelles ou sur les doigts et les lamelles à la fois. On peut ainsi réaliser une couronne complète de crans d'ancrage. Le rebord d'accrochage 100, réalisé sur tout le tour du bouchon, permet de garantir qu'après. dévissage, la douille d'ancrage est maintenue dans le bouchon.

Il peut être avantageux de disposer plusieurs rainures dans le bouchon. Sur la figure 3, on a représenté cinq telles rainures. Un ou plusieurs ergots peuvent leur correspondre sur le bouchon : sur la figure 3 un seul ergot est représenté. Une réalisation avec plusieurs rainures correspondant à plusieurs ergots permet un meilleur maintien et une meilleure stabilité de la douille d'ancrage dans le bouchon.

Dans une forme préférée de réalisation on a ménagé cinq ergots en correspondance avec cinq rainures.

Le dispositif selon l'invention est particulièrement destiné à assurer l'étanchéité et l'ancrage d'un câble dans une fiche ou dans une prise ; surtout si ces éléments doivent être utilisés dans une atmosphère imposant une très bonne étanchéité, comme pair exemple une atmosphère explosive.

## Revendications

1. Dispositif destiné à réaliser l'ancrage d'un conduit, notamment câble électrique (6), dans un corps, notamment corps (1) de connecteur, comportant un bouchon (2) se montant sur ledit corps (1) et une douille d'ancrage (4) qui est disposée dans ce bouchon et qui peut prendre, en fonction de la position du bouchon (2) dans le corps (1), une configuration non serrée ou une configuration serrée, **caractérisé par** la disposition sur la douille d'ancrage (4) et sur le bouchon (2) de moyens complémentaires (8, 10) adaptés à maintenir la douille d'ancrage (4) dans le bouchon (2).

2. Dispositif selon la revendication 1, **caractérisé en ce que** la douille d'ancrage (4) est immobilisée dans le bouchon (2) par complémentarité de forme.

3. Dispositif selon la revendication 1 ou 2, **caractérisé en ce que** la douille d'ancrage (4) est dans sa configuration non serrée, avant vissages et après dévissages du bouchon (2) et du corps (1).

4. Dispositif selon l'une quelconque des revendications 1 à 3, **caractérisé en ce que** la douille d'ancrage (4) comporte au moins un ergot (8) saillant radialement et que le bouchon (2) comporte au moins une empreinte (9) en creux radialement apte à recevoir ledit au moins un ergot.

5. Dispositif selon l'une quelconque des revendications 1 à 3, **caractérisé en ce que** la douille d'ancrage (4) comporte au moins un ergot (8) saillant radialement et que le bouchon (2) comporte plusieurs empreintes (9) en creux radialement aptes à recevoir ledit au moins un ergot.

6. Dispositif selon l'une quelconque des revendications 1 à 3, **caractérisé en ce que** la douille d'ancrage (4) comporte plusieurs ergots (8) saillant radialement et que le bouchon (2) comporte plusieurs empreintes (9), en nombre égal au nombre d'ergots, en creux radialement, chacune des empreintes (9) étant apte à recevoir un desdits ergots (8).

7. Dispositif selon l'une quelconque des revendications 4 à 6, **caractérisé en ce que** chaque ergot (8) présente une forme sphérique.

8. Dispositif selon l'une quelconque des revendications 4 à 7, **caractérisé en ce qu'**au moins une empreinte (9) forme une rainure qui présente deux flancs longitudinaux (90) et qui est limitée axialement par un rebord (10).

9. Dispositif selon l'une quelconque des revendications 4 à 8, **caractérisé en ce qu'**à partir d'une situation où chaque ergot (8) est logé dans une empreinte (9), le montage du bouchon (2) sur le corps (1 ) resserre la douille d'ancrage (4), ce qui entraîne l'échappement de chaque ergot (8) de l'empreinte (9) dans laquelle il était logé.

10. Dispositif selon l'une quelconque des revendications 4 à 9, **caractérisé en ce que** la douille d'ancrage (4) est munie d'un ensemble de doigts (12) cunéiformes alternant avec un ensemble de lamelles (17) d'entraînement de ces doigts, l'un au moins des doigts (12) portant un ergot (8).

11. Dispositif selon la revendication 10, **caractérisé en ce que** chaque doigt (12) porte un ergot (8).

12. Dispositif selon la revendication 10 ou 11, le corps (1) et le bouchon (2) formant un passage tubulaire, **caractérisé en ce que** lors du serrage du bouchon (2) sur le corps (1), au moins chaque doigt (12) qui présente un ergot (8) s'incurve vers l'intérieur du passage tubulaire sous l'action des lamelles (17) d'entraînement.

13. Dispositif selon l'une quelconque des revendications précédentes, **caractérisé en ce que** la douille d'ancrage (4) comporte cinq ergots (8) saillant radialement et que le bouchon (2) comporte cinq empreintes (9) aptes, chacune, à recevoir un ergot (8).

## Patentansprüche

1. Vorrichtung zur Verankerung einer Leitung, insbesondere eines elektrischen Kabels (6), in einem Körper, insbesondere in einem Verbinderkörper (1), die aus einem auf dem Körper (1) zu montierenden Stopfen (2) und aus einer Verankerungshülse (4) besteht, die in diesem Stopfen angeordnet ist und in Abhängigkeit von der Stellung des Stopfens (2) im Körper (1) eine nicht angezogene oder eine angezogene Konfiguration annehmen kann, **gekennzeichnet durch** die Anordnung von ergänzenden Mitteln (8, 10) auf der Verankerungshülse (4) und auf dem Stopfen (2), die dafür ausgelegt sind, die Verankerungshülse (4) in dem Stopfen (2) zu halten.

2. Vorrichtung nach Anspruch 1, **dadurch gekennzeichnet, dass** die Verankerungshülse (4) in dem Stopfen (2) durch Formergänzung blockiert wird.

3. Vorrichtung nach Anspruch 1 oder 2, **dadurch gekennzeichnet, dass** die Verankerungshülse (4) vor Verschraubungen und nach Ausschraubungen von Stopfen (2) und Körper (1) in ihrer nicht angezogenen Konfiguration ist.

4. Vorrichtung nach einem der Ansprüche 1 bis 3, **dadurch gekennzeichnet, dass** die Verankerungshülse (4) mindestens eine radial vorstehende Nase (8) aufweist und dass der Stopfen (2) mindestens eine radial ausgesparte Vertiefung (9) aufweist, die diese mindestens eine Nase aufnehmen kann.

5. Vorrichtung nach einem der Ansprüche 1 bis 3, **dadurch gekennzeichnet, dass** die Verankerungshülse (4) mindestens eine radial vorstehende Nase (8) aufweist und dass der Stopfen (2) mehrere radial ausgesparte Vertiefungen (9) aufweist, die diese mindestens eine Nase aufnehmen können.

6. Vorrichtung nach einem der Ansprüche 1 bis 3, **dadurch gekennzeichnet, dass** die Verankerungshülse (4) mehrere radial vorstehende Nasen (8) aufweist und dass der Stopfen (2) mehrere radial ausgesparte Vertiefungen (9) in der Anzahl der Nasen aufweist, wobei jede der Vertiefungen (9) eine der Nasen (8) aufnehmen kann.

7. Vorrichtung nach einem der Ansprüche 4 bis 6, **dadurch gekennzeichnet, dass** jede Nase (8) eine sphärische Form besitzt.

8. Vorrichtung nach einem der Ansprüche 4 bis 7, **dadurch gekennzeichnet, dass** mindestens eine Vertiefung (9) eine Nut bildet, die zwei Längsflanken (90) aufweist und durch eine Randabwinklung (10) axial begrenzt ist.

9. Vorrichtung nach einem der Ansprüche 4 bis 8, **dadurch gekennzeichnet, dass** die Verankerungshülse (4) durch die Montage des Stopfens (2) auf dem Körper (1) von dem Zustand an, in dem jede Nase (8) in eine Vertiefung (9) eintritt, zusammengedrückt wird, was das Austreten jeder Nase (8) aus der Vertiefung (9), in der sie sich befand, mit sich bringt.

10. Vorrichtung nach einem der Ansprüche 4 bis 9, **dadurch gekennzeichnet, dass** die Verankerungshülse (4) mit einer Gruppe von keilförmigen Fingern (12) versehen ist, die mit einer Gruppe von Lamellen (17) zum Antrieb dieser Finger abwechseln, wobei mindestens einer der Finger (12) eine Nase (8) trägt.

11. Vorrichtung nach Anspruch 10, **dadurch gekennzeichnet, dass** jeder Finger (12) eine Nase (8) trägt.

12. Vorrichtung nach Anspruch 10 oder 11, bei der der Körper (1) und der Stopfen (2) einen rohrförmigen Durchgang bilden, **dadurch gekennzeichnet, dass** sich mindestens jeder Finger (12), der eine Nase (8) aufweist, bei Festschrauben des Stopfens (2) auf dem Körper (1) unter der Einwirkung der Antriebslamellen (17) auf das Innere des rohrförmigen Durchgangs zu krümmt.

13. Vorrichtung nach einem der vorhergehenden Ansprüche, **dadurch gekennzeichnet, dass** die Verankerungshülse (4) fünf radial vorstehende Nasen (8) aufweist und dass der Stopfen (2) fünf Vertiefungen (9) aufweist, die jeweils eine Nase (8) aufnehmen können.

## Claims

1. A device intended to effect anchoring of a conduit, in particular an electric cable (6), in a body, in particular a connector body (1), comprising a cap (2) which fits on to said body (1) and an anchoring sleeve (4) which is disposed in said cap and which in dependence on the position of the cap (2) in the body (1) can adopt a non-clamped configuration or a clamped configuration, **characterised by** the provision on the anchoring sleeve (4) and on the cap (2) of complementary means (8, 10) adapted to hold the anchoring sleeve (4) in the cap (2).

2. A device according to claim 1 **characterised in that** the anchoring sleeve (4) is immobilised in the sleeve (2) by virtue of complementarity in respect of shape.

3. A device according to claim 1 or claim 2 **characterised in that** the anchoring sleeve (4) is in its non-clamped configuration before screwing and after unscrewing of the cap (2) and the body (1).

4. A device according to any one of claims 1 to 3 **characterised in that** the anchoring sleeve (4) comprises at least one radially projecting lug (8) and that the cap (2) comprises at least one radially recessed depression (9) for receiving said at least one lug.

5. A device according to any one of claims 1 to 3 **characterised in that** the anchoring sleeve (4) comprises at least one radially projecting lug (8) and that the cap (2) comprises a plurality of radially recessed depressions (9) for receiving said at least one lug.

6. A device according to any one of claims 1 to 3 **characterised in that** the anchoring sleeve (4) comprises a plurality of radially projecting lugs (8) and that the cap (2) comprises a plurality of radially recessed depressions (9), the number thereof being equal to the number of lugs, each of the depressions (9) being capable of receiving one of said lugs (8).

7. A device according to any one of claims 4 to 6 **characterised in that** each lug (8) is of a spherical shape.

8. A device according to any one of claims 4 to 7 **characterised in that** at least one depression (9) forms a groove which has two longitudinal flanks (90) and which is axially limited by a rim portion (10).

9. A device according to any one of claims 4 to 8 **characterised in that** from a situation in which each lug (8) is accommodated in an depression (9), fitting of the cap (2) to the body (1) clamps the anchoring sleeve (4) again, which causes each lug (8) to come out of the depression (9) in which it was accommodated.

10. A device according to any one of claims 4 to 9 **characterised in that** the anchoring sleeve (4) is provided with an assembly of cuneiform fingers (12) alternating with an assembly of entrainment tongues (17) for said fingers, one at least of the fingers (12) carrying a lug (8).

11. A device according to claim 10 **characterised in that** each finger (12) carries a lug (8).

12. A device according to claim 10 or claim 11, the body (1) and the cap (2) forming a tubular passage, **characterised in that** when the cap (2) is clamped on the body (1) at least each finger (12) which has a lug (8) is curved inwardly of the tubular passage under the action of the entrainment tongues (17).

13. A device according to any one of the preceding claims **characterised in that** the anchoring sleeve (4) comprises five radially projecting lugs (8) and that the cap (2) comprises five depressions (9) for each receiving a lug (8).
